# FASCICULE DE BREVET EUROPEEN

(11) **EP 2 363 342 B1**
(45) Date de publication et mention de la délivrance du brevet: **09.05.2012**
(21) Numéro de dépôt: 11000740.8
(22) Date de dépôt: 31.01.2011
(51) Int. Cl.: B64C 27/33, F03D 1/06, B64C 27/54

(54) **Pale à vrillage adaptatif, et rotor muni d'une telle pale**
Blatt mit adaptiver Verdrehung und Rotor mit einem solchen Blatt
Blade with adaptive twist and rotor with such a blade

(30) Priorité: 26.02.2010 FR 1000809
(43) Date de publication de la demande: 07.09.2011
(73) Titulaire: EUROCOPTER, 13725 Marignane Cédex (FR)
(72) Inventeur: Bianchi, Laurent, 13012 Marseille (FR); Cuenca, Rémy, 13680 Lancon de Provence (FR); Galan, Mathieu, 69006 Lyon (FR); Reveillon, Damien, 37420 Avoine (FR)
(74) Mandataire: Pouillot, Laurent Pierre Paul

(56) Documents cités:
- EP-A2- 0 351 577
- WO-A1-96/11337
- FR-A1- 2 737 465
- GB-A- 2 216 606
- US-A1- 2006 186 263

## Description

La présente invention concerne une pale à vrillage adaptatif et un rotor muni d'une telle pale, et plus particulièrement mais non exclusivement une pale d'un rotor de sustentation de giravion.

Classiquement, une pale s'étend longitudinalement d'une première extrémité destinée à être fixée à un moyeu tournant d'un rotor vers une deuxième extrémité dite extrémité libre. Par rapport au rotor, on comprend que la pale s'étend radialement de la première extrémité vers la deuxième extrémité.

De plus, cette pale s'étend transversalement d'un bord d'attaque vers un bord de fuite. La pale comprend notamment un revêtement extérieur muni d'une première peau au niveau de son extrados dénommée par commodité « peau d'extrados », et d'une deuxième peau au niveau de son intrados dénommée par commodité « peau d'intrados ».

Une pale d'un rotor principal de sustentation d'un giravion exerce une portance durant le mouvement rotatif dudit rotor principal permettant de sustenter le giravion voire de le propulser. En fonction de l'angle de pas de la pale, la portance développée est plus ou moins importante. L'angle d'incidence aérodynamique de chaque profil aérodynamique de la pale, dénommé « profil » par commodité, d'une section normale à l'axe de variation de pas de la pale dépend de l'angle de pas de la pale.

Par contre, on observe à partir d'un angle d'incidence seuil d'un profil donné, donc d'une section de la pale, un décollement des filets d'air au niveau du bord d'attaque ou du bord de fuite de ce profil. Ce décollement provoque un décrochage de la pale, soit une chute brutale de sa portance si ce phénomène se propage et demeure sur une zone comprise ente deux profils délimitant une surface critique selon l'envergure de la pale. De plus, le décollement des filets d'air génère un tourbillon qui est à l'origine d'une augmentation du coefficient de traînée de la pale et de vibrations.

Pour limiter les décollements, une solution consiste à vriller géométriquement la pale. Il est à noter que le vrillage géométrique d'une pale peut se définir par l'angle formé entre la corde de chaque profil d'une section de la pale avec un plan de référence de cette pale. Parfois, on vrille chaque profil de la pale par rapport à l'axe de variation de pas de cette pale d'un angle repéré par rapport à un tel plan de référence.

Pour une trajectoire de pale donnée, on comprend que le vrillage influe directement sur l'incidence aérodynamique de chaque profil. Dans ces conditions, on appelle « loi de vrillage » l'évolution selon l'envergure de la pale desdits angles de vrillage.

La loi de vrillage d'une pale est immuable. Cette loi de vrillage résulte d'un compromis admis pour satisfaire le fonctionnement optimal du rotor sur l'ensemble du domaine de vol.

En effet, on constate qu'une amplitude de vrillage faible sur l'ensemble de l'envergure de la pale permet de minimiser la puissance consommée par le rotor de sustentation d'un giravion en vol d'avancement. A l'inverse, une amplitude de vrillage importante sur l'ensemble de l'envergure de la pale permet de minimiser la puissance consommée par le rotor de sustentation d'un giravion en vol stationnaire mais est rédhibitoire dans le cas d'un vol d'avancement. On note que l'on entend par « amplitude faible » une amplitude inférieure à 6 degrés par exemple, alors que l'on entend par « amplitude importante » une amplitude supérieure à 20 degrés par exemple.

Ainsi, une amplitude de vrillage comprise entre ces amplitudes faible et importante représente un compromis entre une phase de vol d'avancement et une phase de vol stationnaire en terme de puissance consommée.

Pour éviter un tel compromis, il est envisagé de modifier de manière active le vrillage d'une pale, au moins localement.

Selon une première solution, on utilise au moins un volet prolongeant localement le bord de fuite de la pale. En modifiant le braquage de ce volet par rapport à la pale, on modifie finalement la géométrie locale de la pale et les caractéristiques aérodynamiques des profils correspondant.

Cette première solution présente l'avantage d'engendrer une déformation et un vrillage conséquents. Par contre, cette première solution implique l'ajout d'un volet générant de fait un surpoids de masse en dehors du centre de gravité, ainsi que la présence de mouvements mécaniques à entretenir et la création de tourbillons aux bords latéraux des volets.

Les publications suivantes sont relatives à l'actionnement de tels volets :
- O. Dieterich, B. Enenkl, D. Roth : Trailing edge flaps for active rotor control, Aeroeslastic characteristics of the ADASYS rotor system, American Helicopter Society, 62 th Annual Forum, Phoenix, AZ, May 9-11, 2006.
- S. R. Hall and E. F. Prechtl : Preliminary Testing of a Mach-Scaled Active Rotor Blade with a Trailing Edge Servo-Flap, Massachusetts Institute of Technology 77 Massachusetts Ave Cambridge, MA 02139-4307 USA, 2000.
- V. Giurgiutiu : Active-Materials Induced-Strain Actuation for Aeroelastic Vibration Control, The Shock and Vibration Digest, Vol. 32, No. 5, September 2000, 355-368.
- F. K. Straub, D. K. Kennedy, D. B. Domzalski, A. A. Hassan, H. Ngo, V. Anand, et T. Birchette : Smart material-actuated Rotor Technology, Journal of intelligent Material Systems and Structures, Vol. 15 April 2004.
- C. K. Maucher, B. A. Grohmann, P. Jänker, A. Altmikus, F. Jensen, H. Baier : Actuator design for the active trailing edge of a helicopter rotor blade.
- K. Thanasis : Smart Rotor Blades and Rotor Control for Wind Turbines, State of the Art, UpWind internal report for WP 1B3, Décembre 2006.

De même, les documents US7424988, US20080237395, US6513762, US5387083, WO 00/41501, WO 96/01503 évoquent la présence de volets.

Selon une deuxième solution, on utilise dans la peau d'extrados et/ ou la peau d'intrados de la pale des fibres piézoélectriques, des patchs piézo-composites ou encore des macro-fibres composites afin de générer un vrillage de la pale. Cette deuxième solution est notamment décrite dans les publications suivantes :
- D. Thakkar, R. Ganguli : Induced shear actuation of helicopter rotor blade for active twist control, Thin-Walled Structures 45 (2007) 111-121.
- J. P. Rodgers, N. W. Hagood : Design, manufacture, and testing of an integral twist-actuated rotor blade, 8th International Conference on Adaptive Structures and Technology, Wakayama, Japan, 1997
   - J. Riemenschneider, S. Keye, P. Wierach, H. Mercier des Rochettes : Overview of the common DLR/ONERA project "active twist blade" (ATB), 30th European Rotorcraft Forum; 14.-16.09.2004; Marseilles, France.
   - A. Kovalovs, E. Barkanov, S. Gluhihs : ACTIVE TWIST OF MODEL ROTOR BLADES WITH D-SPAR DESIGN, TRANSPORT - 2007, Vol XXII, No 1, 38-44.
   - G. L. Ghiringhelli, P. Masarati, P. Mantegazza : Analysis of an actively twisted rotor by multibody global modeling, Composite Structures 52 (2001) 113-122.

   Le brevet US20070205332 utilise une technique équivalente.
   Selon une troisième solution, l'extrados et l'intrados de la pale sont réalisés avec des peaux en matériaux composites anisotropes.
   Conformément à la publication «M. D. Schliesman : Improved methods for measurement of extension-twist coupling in composite iaminate, Aeronautics and Astronautics inc, 1999», une traction exercée sur une telle peau est susceptible d'engendrer un vrillage de la peau.
   Selon la publication « S. Ozbay : Extension-twist coupling optimization in composite rotor blades, Rapport de these présentée à Georgia Institute of Technology en Mai 2006 », on utilise un système de masses coulissantes pour générer le vrillage par torsion de telles peaux.
   Selon une quatrième technique, on utilise des actionneurs pour vriller la pale. Par exemple, le brevet US7264200 divulgue l'utilisation d'un actionneur pour manoeuvrer des volets agencés à la deuxième extrémité libre de la pale.
   Les documents US20060186269, WO 99/36313, WO 2007/145718 mettent en oeuvre des actionneurs pour déformer une structure.
   Les documents US7037076, WO 98/30448 utilisent des actionneurs pour générer une rotation de la deuxième extrémité de la pale.
   Le document US5505589 prévoit d'embarquer un élément pesant déplaçable pour générer un vrillage.
   Selon le document US5150864, on utilise un câble à mémoire de forme que l'on chauffe pour obtenir une déformation de la pale.
   Par conséquent, on constate que les techniques visant à vriller activement une pale mettent en oeuvre des organes dédiés à ce vrillage, tels que des actionneurs, des éléments pesants ou des moyens de chauffage. Il en résulte une augmentation de la masse de pale.
   On note que le document WO2008052677 présente une pale d'éolienne pourvue d'un caisson central allongé selon une direction longitudinale qui se vrille en fonction du vent incident, ce vent impactant le caisson selon une direction transversale sensiblement perpendiculaire à la direction longitudinale de la pale.
   Le document US20060186263 décrit un moyen pour ajuster l'angle d'une pale et plus précisément pour contrôler le pas de la pale, et non pas le vrillage de la pale. A cet effet, on utilise un moyen agissant uniquement sur le pied de pale qui s'appuie sur le phénomène physique de rigidification en torsion et/ou de rappel à plat.
   La loi de vrillage de la pale reste inchangée, l'angle de vrillage restant constant tout au long de son envergure.
   Le document FR2737465 a pour objet de minimiser le bruit et les vibrations à l'aide d'un dispositif utilisant un actionneur annexe et un revêtement extérieur anisotrope.
   Ces documents ne font pas partie du domaine technique de l'invention à savoir le domaine des moyens de vrillage d'une pale de rotor permettant d'optimiser la portance de cette pale, notamment une pale de giravion. Ils sont de fait cités à titre d'arrière plan technologique.
   Par ailleurs, l'état de la technique inclut les documents WO 96/11337, GB 2 216 606 et EP 0 351 577.
   Le document WO 96/11337 présente une pale comportant un tube réalisé en une matière anisotropique se vrillant autour d'un axe longitudinal sous l'effet d'un effet axial.
   Le document GB 2216606 présente une pale munie notamment de deux longerons collés à un revêtement extérieur.
   Le document EP 0351577 présente une pale munie d'une lame.
   La présente invention a alors pour objet de proposer une pale à vrillage actif ne nécessitant pas nécessairement l'apport d'organes dédiés uniquement à cette application.
   Selon l'invention, une pale de rotor à vrillage adaptatif est munie d'un revêtement extérieur s'étendant selon un axe de variation de pas d'une première zone extrémale à une deuxième zone extrémale, ce revêtement extérieur délimitant une cavité interne creuse. La première zone extrémale se situe au niveau de la première extrémité de la pale qui est apte à être fixée à un moyeu, alors que la deuxième zone extrémale se situe au niveau de la deuxième extrémité libre de la pale.
   Cette pale est notamment remarquable en ce qu'elle comporte une lame s'étendant à l'intérieur de la cavité, la lame comportant un matériau composite anisotrope pour être apte à se vriller sous l'effet de forces centrifuges lorsque la pale est en rotation autour d'un axe de rotation d'un rotor, la lame étant fixée au revêtement extérieur par un premier moyen de fixation et un deuxième moyen de fixation pour pouvoir vriller ce revêtement extérieur.
   Ainsi, la lame en matériau composite anisotrope s'étend notamment à l'intérieur de la cavité de la pale, cette cavité étant délimitée par une périphérie interne du revêtement extérieur. Lorsque la pale est mise en mouvement de rotation par un moyeu, les forces centrifuges vrillent la lame, le vrillage de la lame résultant du caractère anisotrope de cette lame. Le vrillage de la lame est donc variable en fonction de la vitesse de rotation de la lame.
   On note que l'invention vise à vriller une lame agencée à l'intérieur d'une cavité de la pale, et non pas à vriller le revêtement extérieur de cette pale. De plus, le vrillage est provoqué par la force centrifuge et non pas par un vent incident impactant la pale ou par un actionneur.
   Cette innovation est notamment intéressante dans la mesure où la force centrifuge est plus importante au niveau de cette lame.
   Pour vriller l'intégralité de la pale, la lame est alors fixée à la périphérie interne du revêtement extérieur. Dès lors, la force centrifuge vrille la lame, cette lame vrillant alors le revêtement extérieur via les premier et deuxième moyens de fixation.
   Par suite, la pale est une pale à vrillage actif, son vrillage variant en fonction de la force centrifuge exercée sur la lame en matériau composite anisotrope agencé à l'intérieur de son revêtement extérieur.
   L'invention comporte de plus une ou plusieurs des caractéristiques additionnelles qui suivent.
   Par exemple, la lame comporte un empilement de plis composites unidirectionnels antisymétriques par rapport à un pli médian. Alternativement, la lame peut comporter un empilement de tissus unidirectionnels antisymétriques par rapport à un pli médian.
   L'empilement peut comporter une alternance de plis en fibres de carbone et de plis en fibres de verre.
   Optionnellement, le pli médian ayant une pluralité de fibres de référence s'étendant selon une direction de référence, un premier pli et un deuxième pli de l'empilement étant disposés symétriquement de part et d'autre dudit pli médian, ledit premier pli étant agencé entre ledit pli médian et une peau d'extrados dudit revêtement et présentant des premières fibres ayant une première angulation par rapport à la direction de référence, le deuxième pli étant agencé entre le pli médian et une peau d'intrados du revêtement extérieur et présentant des deuxièmes fibres ayant une deuxième angulation par rapport à la direction de référence, la première angulation est opposée à la deuxième angulation.
   Il est à noter que la peau d'extrados et la peau d'intrados peuvent constituer conjointement une seule et même peau. Le revêtement a alors une unique peau, une partie de cette unique peau représentant la peau d'intrados et une autre partie de cette unique peau représentant la peau d'extrados.
   Dès lors, les peaux d'intrados et d'extrados peuvent indifféremment être soit deux peaux distinctes soit représenter deux parties d'une unique peau.
   Dès lors, on garantit les caractères anisotropes et antisymétriques de l'empilement.
   On considère que le pli médian a une angulation de zéro degré par rapport la direction de référence. Le premier pli est constitué par exemple de fibres présentant une première angulation de 30 degrés par rapport à la direction de référence ce qui implique que le deuxième pli est constitué notamment de fibres présentant une deuxième angulation de -30 degrés par rapport à la direction de référence.
   Par ailleurs, le pli médian ayant une pluralité de fibres de référence s'étendant selon une direction de référence, la direction de référence est parallèle à l'axe de variation de pas.
   La lame peut remplir la fonction d'un longeron en reprenant les efforts générés par la force centrifuge, ce qui optimise sa capacité de vrillage lorsque les forces centrifuges exercent une traction sur cette pale.
   En outre, l'empilement peut comporter un nombre de plis variables le long de l'envergure de la pale pour optimiser le vrillage.
   De plus, la lame saille éventuellement de la première zone extrémale du revêtement pour représenter une première extrémité de la pale apte à être fixée à un moyeu. Une première portion extrémale de la lame est ainsi fixée au moyeu du rotor alors que la force centrifuge exerce une traction sur une deuxième portion extrémale, la traction en résultant vrillant la lame et de fait la pale.
   Pour maximiser le vrillage, le premier moyen de fixation présente un décalage par rapport au deuxième moyen de fixation selon une corde de la pale.
   Par exemple, le revêtement extérieur comportant une peau d'intrados et une peau d'extrados, distinctes ou formant conjointement une unique peau de revêtement, la lame comportant une zone avant à proximité du bord d'attaque de la pale et une zone arrière à proximité du bord de fuite de la pale, le premier moyen de fixation fixe la zone avant à l'une desdites peaux et le deuxième moyen de fixation fixe la zone arrière à l'autre peau à laquelle n'est pas fixée la zone avant. Le décalage selon la corde de la pale est alors optimal.
   De plus, le premier moyen de fixation s'étend dans la cavité selon une première direction longitudinale parallèle à l'axe de variation de pas, le deuxième moyen de fixation s'étendant dans la cavité selon une deuxième direction longitudinale parallèle à l'axe de variation de pas.
   Le premier moyen de fixation peut être un profilé continu s'étendant selon la première direction longitudinale, ou peut comprendre une pluralité de profilés disposés selon la première direction longitudinale. De même, le deuxième moyen de fixation peut être un profilé continu s'étendant selon la deuxième direction longitudinale, ou peut comprendre une pluralité de profilés disposés selon la deuxième direction longitudinale.
   Par ailleurs, la pale comporte un longeron interne à savoir un longeron de bord d'attaque liant une peau d'intrados et une peau d'extrados dudit revêtement extérieur.
   Pour profiter au mieux de l'effet de la force centrifuge, la section selon la corde du longeron de bord d'attaque est très réduite afin que la force centrifuge soit reprise au maximum par la lame. Il en résulte que la pale est à même de se vriller sur une grande amplitude.
   Selon un autre aspect, la pale comporte un arêtier de bord de fuite liant une peau d'intrados et une peau d'extrados dudit revêtement extérieur. Eventuellement, un matériau de remplissage est disposé entre la zone arrière de la lame et l'arêtier, ce matériau de remplissage n'entravant pas le vrillage de la pale, et pouvant même favoriser ce vrillage.
   Le revêtement extérieur comportant une peau d'intrados et une peau d'extrados, pour optimiser le vrillage il est aussi possible qu'au moins une peau comporte un matériau composite anisotrope.
   De même, la pale peut comporter un moyen de réglage pour modifier la position du centre de gravité de la pale, notamment la position du centre de gravité de la pale selon l'envergure de cette pale. En faisant varier de la sorte la position de ce centre de gravité, on modifie en effet la force centrifuge appliquée sur la lame, et donc le vrillage de la pale en résultant.
   Selon un autre aspect, au moins un tronçon de ladite lame est vrillé, ledit au mois un tronçon de ladite lame présentant une loi de vrillage. Ainsi, l'intégralité ou au moins un tronçon de la lame présente une loi de vrillage. En vol, la force centrifuge augmente le vrillage ou réduit ce vrillage le cas échéant.
   Par ailleurs, au moins un tronçon dudit revêtement extérieur est vrillé, cet au moins un tronçon du revêtement extérieur présentant une loi de vrillage.
   Outre une pale, l'invention a aussi pour objet un rotor de giravion muni d'un moyeu et d'une pluralité de pales, ce rotor étant muni d'au moins une pale selon l'invention telle que décrite précédemment.
   Plus particulièrement, l'invention se rapporte à un giravion de type hélicoptère.
   L'invention et ses avantages apparaîtront avec plus de détails dans le cadre de la description qui suit avec des exemples de réalisation donnés à titre illustratif en référence aux figures annexées qui représentent :
   - la figure 1, une vue d'une pale selon l'invention,
   - la figure 2, un schéma illustrant une variante de l'invention,
   - la figure 3, une coupe d'une pale selon un premier mode de réalisation,
   - la figure 4, une coupe d'une pale selon un deuxième mode de réalisation,
   - la figure 5, une coupe d'une lame selon l'invention, et
   - la figure 6, un schéma présentant une variante de ladite lame

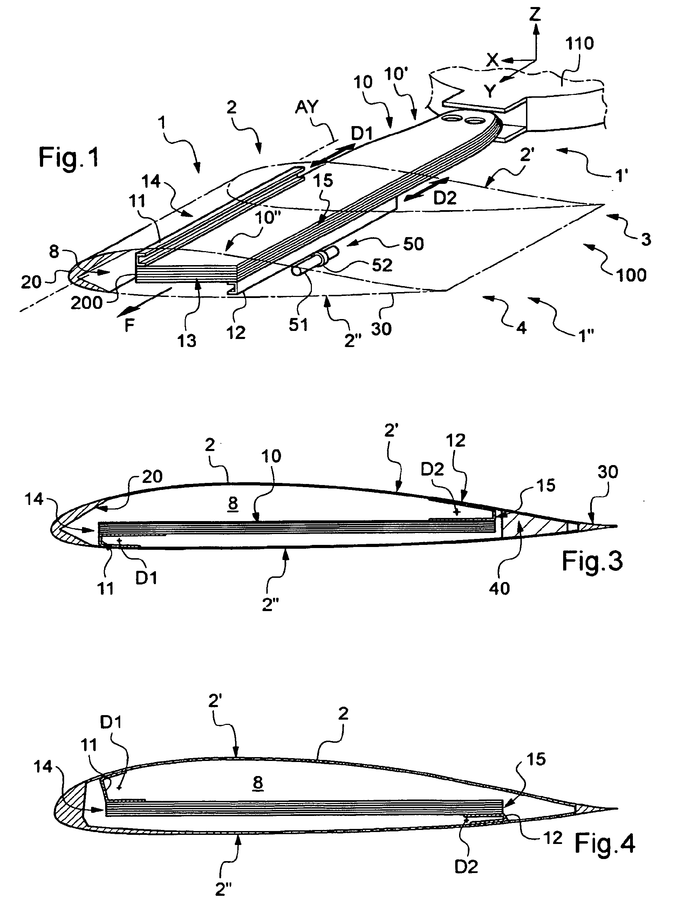

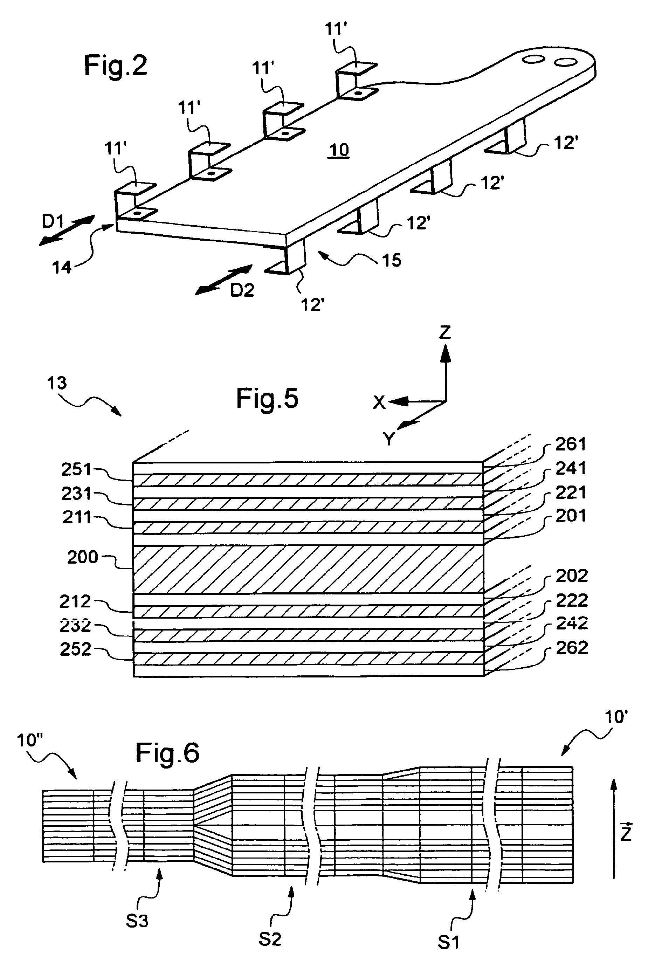

   Les éléments présents dans plusieurs figures distinctes sont affectés d'une seule et même référence.
   On note que trois directions X, Y et Z orthogonales les unes par rapport aux autres sont représentées sur les figures 1 et 2.
   La direction X est dite transversale. Le terme « largeur » est relatif à une dimension transversale de la pale selon cette direction transversale X.
   Une autre direction Y est dite direction de référence dans la mesure où la pale s'étend selon cette direction Y. Les directions dites longitudinales et l'axe de variation de pas de la pale sont parallèles à cette direction de référence.
   Enfin, une troisième direction Z est dite d'élévation et correspond aux dimensions en hauteur des structures décrites. Le terme « épaisseur » est alors relatif à une dimension en élévation selon cette direction d'élévation.
   La figure 1 présente une vue schématique d'une pale 1 selon l'invention. Cette pale 1 s'étend d'une première extrémité 1' fixée à un moyeu 110 d'un rotor de giravion 100, vers une deuxième extrémité 1" libre.
   Cette pale 1 comporte un revêtement extérieur 2 s'étendant d'une première zone extrémale 3 au niveau de la première extrémité 1' de la pale 1 vers une deuxième zone extrémale 4 au niveau de la deuxième extrémité 1" de la pale 1. Ce revêtement extérieur 2 est pourvu d'une peau d'extrados 2' et d'une peau d'intrados 2" qui délimitent conjointement une cavité 8 à l'intérieur du revêtement extérieur 2.
   Le revêtement extérieur 2 est donc au moins partiellement creux.
   Par ailleurs, la pale 1 comporte un longeron de bord d'attaque 20 et un arêtier de bord de fuite 30 entre la peau d'extrados 2' et la peau d'intrados 2". On note que la section transversale du longeron de bord d'attaque 20 est minimisée, sa fonction consistant essentiellement à protéger la pale 1 contre les impacts.
   En effet, la pale 1 comporte aussi une lame 10 remplissant le rôle de longeron de manière à transmettre les efforts subis par la pale 1 au moyeu 110.
   Cette lame 10 est longiligne et s'étend dans la cavité 8 selon une direction allant de la deuxième zone extrémale 4 vers la première zone extrémale 3.
   On note qu'un remplissage souple n'entravant pas la déformation de la lame 10 peut être agencé entre la lame 10 et le revêtement extérieur, pour éviter des déformations du revêtement sous l'effet de la pression extérieure. Pour maximiser le vrillage et garantir l'intégrité de la pale sous l'effet des efforts exercés en vol sur cette pale, le revêtement a un module de compression élevé et un module de cisaillement très faible. Le remplissage est ainsi rigide en compression et souple en cisaillement.
   De plus, cette lame 10 saille de la première zone extrémale 3 du revêtement extérieur 2 pour être fixée au moyeu 110. La lame 10 s'étend alors selon une direction de référence Y parallèle à l'axe de variation de pas AY de la pale 1. La lame 10 s'étend donc radialement par rapport au moyeu 110.
   On note qu'un manchon pourrait être agencé entre la lame 10 et le moyeu 110. Selon une autre variante, la lame 10 est reliée à une manchette intégrée de la pale 1, cette manchette intégrée prolongeant le revêtement extérieur pour être fixée au moyeu 110.
   Ainsi, la lame 10 reprend au moins une partie substantielle de la force centrifuge F exercée sur la pale 1.
   Par ailleurs, la lame 10 est reliée au revêtement extérieur 2 par un premier moyen de fixation 11 et un deuxième moyen de fixation 12. Le deuxième moyen de fixation 12 est décalé par rapport au premier moyen de fixation 11 selon la corde de la pale 1. Dès lors, au sein de chaque profil (ou section) de la pale pourvu d'un premier moyen de fixation 11 et d'un deuxième moyen de fixation 12, le premier moyen de fixation 11 est décalé transversalement par rapport au deuxième moyen de fixation 12 selon la corde du profil.
   De plus, on note que le premier moyen de fixation 11 s'étend dans la cavité 8 selon une première direction longitudinale D1 parallèle à l'axe de variation de pas AY, le deuxième moyen de fixation 12 s'étendant dans la cavité 8 selon une deuxième direction longitudinale D2 parallèle à l'axe de variation de pas AY.
   Selon la variante préférée représentée sur la figure 1, le premier moyen de fixation 11 comprend un unique profilé continu, en forme de U par exemple. De même, le deuxième moyen de fixation 12 comprend un unique profilé continu, tel qu'une cornière en forme de U.
   En référence à la figure 2, selon une variante alternative au moins un moyen de fixation comporte une pluralité de profilés répartis selon une direction longitudinale. Par exemple, le premier moyen de fixation 11 comprend une pluralité de profilés 11', en forme de U éventuellement. De même, le deuxième moyen de fixation 12 comprend une pluralité de profilés 12', en forme de U par exemple.
   En référence à la figure 1, indépendamment de la variante, la lame 10 s'étend transversalement d'une zone avant 14 à proximité du bord d'attaque de la pale 1 vers une zone arrière 15 à proximité du bord de fuite de la pale 1, Le premier moyen de fixation 11 fixe la zone avant 14 à l'une des peaux 2', 2" et le deuxième moyen de fixation 12 fixe la zone arrière 15 à l'autre peau 2", 2' à laquelle n'est de fait pas fixée la zone avant 14.
   En référence à la figure 3, le premier moyen de fixation 11 solidarise la zone avant 14 à la peau d'intrados 2", le deuxième moyen de fixation 12 solidarisant la zone arrière 15 à la peau d'extrados 2'.
   On note qu'il est concevable d'agencer un matériau de remplissage 40 entre l'arêtier de bord de fuite 30 et la zone arrière 15. Ce matériau de remplissage a pour but d'éviter un aplatissement ou un gonflement du revêtement extérieur sous l'effet de la pression.
   En référence à la figure 4, selon une version alternative, le premier moyen de fixation 11 solidarise la zone avant 14 à la peau d'extrados 2', le deuxième moyen de fixation 12 solidarisant la zone arrière 15 à la peau d'intrados 2".
   Par suite, en référence à la figure 1 une déformation de la lame 10 entraîne une déformation du revêtement extérieur 2 de la pale 1, via le premier moyen de fixation 11 et le deuxième moyen de fixation 12.
   Par ailleurs, la lame 10 est réalisée à l'aide d'un matériau composite anisotrope. Une traction selon la direction de référence Y selon laquelle s'étend la lame 10 génère alors un vrillage de cette lame 10. De même, une compression entraîne un vrillage inverse, de même qu'une diminution d'une traction donnée.
   Or, on rappelle que la pale 1 et notamment la lame 10 sont soumises à une force centrifuge F lorsque la pale 1 est entrainée en rotation par le moyeu 110.
   Une première portion extrémale 10' de la lame 10 étant fixée directement ou indirectement au moyeu, la force centrifuge F parallèle à l'axe de variation de pas AY exerce alors une traction sur une deuxième portion extrémale 10" de la lame 10.
   Le caractère anisotrope de la lame 10 provoque un vrillage de la lame 10, et par suite un vrillage du revêtement extérieur 2 par rapport à un état au repos de la lame, la pale ne reprenant pas un effort centrifuge lorsque le rotor est arrêté. Le vrillage de la pale 10 s'adapte alors en fonction de cette force centrifuge F.
   Pour optimiser la pale 1, il est possible d'agencer un moyen de réglage 50 pour modifier notamment la position du centre de gravité de la pale 1 selon l'envergure de cette pale. En effet, en modifiant cette position, on modifie la force centrifuge exercée sur cette pale 1. Par exemple, le moyen de réglage 50 comporte un élément pesant 52 pouvant coulisser le long d'un axe de coulissement 51 à l'aide d'un moyen de déplacement non représenté, l'axe de coulissement étant par exemple parallèle à l'envergure de la pale. Ce moyen de déplacement peut comporter un moteur faisant effectuer une rotation à l'axe de coulissement par exemple, cet axe de coulissement étant une vis sans fin.
   De même, il est envisageable d'équiper la pale d'un moyen connu pour vriller cette pale 1, par exemple des moyens logés indifféremment dans la peau d'extrados 2' et / ou dans la peau d'intrados 2" voire des volets de bord de fuite.
   Par ailleurs, pour avoir un caractère anisotrope optimisé, la lame 10 comporte un empilement 13 de plis unidirectionnels, chaque pli comportant des fibres résistantes dirigées parallèlement à une direction donnée, ces fibres étant noyées dans une matrice de type résine par exemple dont la résistance mécanique est plus faible.
   En référence à la figure 5, l'empilement 13 comporte un pli médian 200 s'étendant selon la direction de référence Y parallèle à l'axe de variation de pas AY de la pale. Ce pli médian comprend par exemple des fibres dirigées parallèlement à la direction de référence Y pour transmettre la force centrifuge au moyeu. Par définition, on considère que le pli médian comprend des fibres à 0° par rapport à la direction de référence.
   Entre le pli médian et la peau d'extrados, l'empilement comporte une pluralité de plis dénommés chacun « premier pli » 201, 211, 221, 231, 241, 251, 261 par commodité. A l'inverse, entre le pli médian et la peau d'intrados, l'empilement comporte une pluralité de plis dénommés chacun « deuxième pli » 202, 212, 222, 232, 242, 252, 262 par commodité.
   On note que l'empilement peut alterner un pli en fibres de carbone avec un pli en fibres de verres. Dès lors, à l'exception des plis inférieur 262 et supérieur 261 délimitant en élévation la lame, chaque pli en fibres de verres est agencé entre deux plis en fibres de carbone et chaque pli en fibres de carbone est agencé entre deux plis en fibres de verre. Le pli médian est éventuellement en fibres de verre.
   De plus, la direction des fibres d'un pli diffère de la direction imposée aux fibres d'un pli adjacent. Par exemple, les fibres d'un pli donné présentent chacune une angulation de 60° par rapport à la direction de référence suivie par les fibres du plan médian, les fibres d'un pli adjacent à ce pli donné présentant chacune une angulation de 90° par rapport à la direction de référence. On note que l'on entend par « angulation par rapport à la direction de référence » l'angle séparant la direction d'une fibre d'un pli donné d'une direction donnée de ce pli donné, ladite direction donnée étant contenue dans le plan défini par le pli donné concerné et étant parallèle à la direction de référence du plan médian.
   Afin de maximiser son caractère anisotrope, l'empilement est de plus antisymétrique.
   Chaque premier pli 201, 211, 221, 231, 241, 251, 261 étant disposé symétriquement à un deuxième pli 202, 212, 222, 232, 242, 252, 262 correspondant de l'empilement par rapport au pli médian 200, chaque premier pli présentant des premières fibres ayant une première angulation par rapport à la direction de référence Y, le deuxième pli 202, 212, 222, 232, 242, 252, 262 correspondant présentant des deuxièmes fibres ayant une deuxième angulation par rapport à ladite direction de référence (Y), la première angulation est opposée à la deuxième angulation. Par exemple, la première angulation valant 60°, la deuxième angulation vaut -60°.
   On comprend cependant que si la première angulation vaut 90°, ou 0°, les premières fibres et les deuxièmes fibres sont parallèles.
   Par exemple, de l'intrados vers l'extrados de la pale, la lame comporte l'empilement 13 suivant :
   - un deuxième pli 262 présentant des fibres de carbone orientées à +30° par rapport à l'orientation des fibres du pli médian,
   - un deuxième pli 252 présentant des fibres de verre orientées à 0° par rapport à l'orientation des fibres du pli médian,
   - un deuxième pli 242 présentant des fibres de carbone orientées à -60° par rapport à l'orientation des fibres du pli médian,
   - un deuxième pli 232 présentant des fibres de verre orientées à +90° par rapport à l'orientation des fibres du pli médian,
   - un deuxième pli 222 présentant des fibres de carbone orientées à -60° par rapport à l'orientation des fibres du pli médian,
   - un deuxième pli 212 présentant des fibres de verre orientées à +90° par rapport à l'orientation des fibres du pli médian,
   - un deuxième pli 202 présentant des fibres de carbone orientées à +30° par rapport à l'orientation des fibres du pli médian,
   - un pli médian 200 présentant des fibres de verre, le pli médian ayant une épaisseur sensiblement égale à deux fois l'épaisseur de chaque premier pli et de chaque deuxième pli,
   - un premier pli 201 présentant des fibres de carbone orientées à -30° par rapport à l'orientation des fibres du pli médian,
   - un premier pli 211 présentant des fibres de verre orientées à -90° par rapport à l'orientation des fibres du pli médian,
   - un premier pli 221 présentant des fibres de carbone orientées à +60° par rapport à l'orientation des fibres du pli médian,
   - un premier pli 231 présentant des fibres de verre orientées à -90° par rapport à l'orientation des fibres du pli médian,
   - un premier pli 241 présentant des fibres de carbone orientées à +60° par rapport à l'orientation des fibres du pli médian,
   - un premier pli 251 présentant des fibres de verre orientées à 0° par rapport à l'orientation des fibres du pli médian,
   - un premier pli 261 présentant des fibres de carbone orientées à -30° par rapport à l'orientation des fibres du pli médian,

   Enfin, en référence à la figure 6, l'empilement comporte éventuellement un nombre plis variable selon l'envergure de la pale. Ainsi, on peut adapter le vrillage sur toute la longueur de la pale comme décrit précédemment mais aussi localement d'une valeur différente sur un tronçon donné.
   Par exemple, dans une première zone S1 située au niveau de la première portion extrémale 10' de la lame 10, à savoir au niveau de la première extrémité de la pale 1, la lame comporte un premier nombre de plis.
   De même, dans une deuxième zone S2 située suite à la première zone S1, la lame comporte un deuxième nombre de plis, différent du premier nombre de plis.
   Enfin, dans une troisième zone S3 située au niveau de la deuxième portion extrémale 10' de la lame 10 et faisant suite à la deuxième zone S2, la lame comporte un troisième nombre de plis.
   Eventuellement, le nombre de plis peut être dégressif, le premier nombre de plis étant supérieur au deuxième nombre de plis, ce deuxième nombre de plis étant supérieur au troisième nombre de plis.
   Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.
   Par exemple, la lame peut comporter un empilement de tissus unidirectionnels antisymétriques par rapport à un pli médian, à la place de plis composites.
   De plus, les figures présentent une lame et un revêtement extérieur contenus chacun dans un plan au repos, à savoir en dehors de l'action de la force centrifuge. Toutefois, au moins un tronçon de la lame et / ou au moins un tronçon du revêtement extérieur peuvent présenter un vrillage suivant une loi de vrillage donnée.

## Revendications

1. Pale (1) de rotor à vrillage adaptatif munie d'un revêtement extérieur (2) s'étendant selon un axe de variation de pas (AY) d'une première zone extrémale (3) à une deuxième zone extrémale (4), ce revêtement extérieur (2) délimitant une cavité (8) interne,
**caractérisé en ce qu'**elle comporte une lame (10) s'étendant à l'intérieur de ladite cavité (8), ladite lame (10) comportant un matériau composite anisotrope pour être apte à se vriller sous l'effet de forces centrifuges (F) lorsque la pale (1) est en rotation, ladite lame (10) étant fixée audit revêtement extérieur (2) par un premier moyen de fixation (11) et un deuxième moyen de fixation (12) pour pouvoir vriller ledit revêtement extérieur (2).

2. Pale selon la revendication 1,
**caractérisée en ce que** ladite lame (10) comporte un empilement (13) de plis composites unidirectionnels antisymétriques par rapport à un pli médian (200).

3. Pale selon la revendication 2,
**caractérisée en ce que**, ledit pli médian (200) ayant une pluralité de fibres de référence s'étendant selon une direction de référence (Y), un premier pli (201, 211, 221, 231, 241, 251, 261) et un deuxième pli (202, 212, 222, 232, 242, 252, 262) de l'empilement étant disposés symétriquement de part et d'autre dudit pli médian (200), ledit premier pli (201, 211, 221, 231, 241, 251, 261) étant agencé entre ledit pli médian (200) et une peau d'extrados (2') dudit revêtement extérieur (2) et présentant des premières fibres ayant une première angulation par rapport à ladite direction de référence (Y), ledit deuxième pli (202, 212, 222, 232, 242, 252, 262) étant agencé entre ledit pli médian (200) et une peau d'intrados (2") dudit revêtement extérieur (2) et présentant des deuxièmes fibres ayant une deuxième angulation par rapport à ladite direction de référence (Y), la première angulation est égale à l'opposée de ladite deuxième angulation.

4. Pale selon l'une quelconque des revendications 2 à 3,
**caractérisée en ce que** ledit pli médian (200) ayant une pluralité de fibres de référence s'étendant selon une direction de référence, ladite direction de référence (Y) est parallèle audit axe de variation de pas (AY).

5. Pale selon la revendication 2,
**caractérisée en ce que** ledit empilement (13) comporte un nombre de plis variables le long de l'envergure de ladite pale (1).

6. Pale selon l'une quelconque des revendications précédentes,
**caractérisée en ce que** ladite lame (10) saille de ladite première zone extrémale (3) dudit revêtement pour représenter une première extrémité (1') de la pale (1) apte à être fixée à un moyeu (110).

7. Pale selon l'une quelconque des revendications précédentes,
**caractérisée en ce que** ledit premier moyen de fixation (11) présente un décalage par rapport audit deuxième moyen de fixation (12) selon une corde de la pale (1).

8. Pale selon l'une quelconque des revendications précédentes,
**caractérisée en ce que** ledit premier moyen de fixation (11) s'étend dans la cavité (8) selon une première direction longitudinale (D1) parallèle audit axe de variation de pas (AY), le deuxième moyen de fixation (12) s'étendant dans la cavité (8) selon une deuxième direction longitudinale (D2) parallèle audit axe de variation de pas (AY).

9. Pale selon l'une quelconque des revendications précédentes,
**caractérisé en ce que** ledit revêtement extérieur (2) comportant une peau d'intrados (2") et une peau d'extrados (2'), ladite lame (10) comportant une zone avant (14) à proximité du bord d'attaque (20) de la pale (1) et une zone arrière (15) à proximité du bord de fuite (30) de la pale (1), ledit premier moyen de fixation (11) fixe la zone avant (14) à l'une desdites peaux (2', 2") et le deuxième moyen de fixation (12) fixe la zone arrière (15) à l'autre peau (2", 2') à laquelle n'est pas fixée la zone avant (14).

10. Pale selon l'une quelconque des revendications précédentes,
**caractérisée en ce qu'**elle comporte un longeron de bord d'attaque (20) liant une peau d'intrados (2") et une peau d'extrados (2') dudit revêtement extérieur (2).

11. Pale selon l'une quelconque des revendications précédentes,
**caractérisée en ce qu'**elle comporte un arêtier de bord de fuite (30) liant une peau d'intrados (2") et une peau d'extrados (2') dudit revêtement extérieur (2).

12. Pale selon l'une quelconque des revendications précédentes,
**caractérisée en ce que**, ledit revêtement extérieur (2) comportant une peau d'intrados (2") et une peau d'extrados (2'), au moins une peau (2', 2") comporte un matériau composite anisotrope.

13. Pale selon l'une quelconque des revendications précédentes,
**caractérisée en ce qu'**elle comporte un moyen de réglage (50) pour modifier la position du centre de gravité de la pale (1).

14. Pale selon l'une quelconque des revendications précédentes,
**caractérisée en ce qu'**au moins un tronçon de ladite lame est vrillé, ledit au moins un tronçon de ladite lame présentant une loi de vrillage.

15. Pale selon l'une quelconque des revendications précédentes,
**caractérisée en ce qu'**au moins un tronçon dudit revêtement extérieur est vrillé, ledit au moins un tronçon dudit revêtement extérieur présentant une loi de vrillage.

16. Rotor de giravion (100) muni d'un moyeu (110) et d'une pluralité de pales (1),
**caractérisée en ce qu'**au moins une pale (1) est selon l'une quelconque des revendications précédentes.

## Claims

1. Rotor blade (1) with adaptive twist provided with an outer covering (2) extending along a pitch variation axis (AY) from a first end zone (3) to a second end zone (4), this outer covering (2) defining an internal cavity (8),
**characterised in that** the blade includes a strip (10) extending inside said cavity (8), said strip (10) comprising a composite material that is anisotropic so as to be suitable for twisting under the effect of centrifugal forces (F) when the blade (1) is in rotation, said strip (10) being fastened to said outer covering (2) by a first fastening means (11) and a second fastening means (12) so as to be capable of twisting said outer covering (2).

2. Blade according to Claim 1,
**characterised in that** said strip (10) comprises a stack (13) of unidirectional composite plies that are antisymmetrical with respect to a middle ply (200).

3. Blade according to Claim 2,
**characterised in that**, with said middle ply (200) having a plurality of reference fibres extending along a reference direction (Y), a first ply (201, 211, 221, 231, 241, 251, 261) and a second ply (202, 212, 222, 232, 242, 252, 262) of the stack being disposed symmetrically on either side of said middle ply (200), said first ply (201, 211, 221, 231, 241, 251, 261) being arranged between said middle ply (200) and a suction side skin (2') of said outer covering (2) and having first fibres at a first angle relative to said reference direction (Y), said second ply (202, 212, 222, 232, 242, 252, 262) being arranged between said middle ply (200) and a pressure side skin (2") of said outer covering (2) and having second fibres at a second angle relative to said reference direction (Y), the first angle is equal and opposite to said second angle.

4. Blade according to either one of Claims 2 to 3,
**characterised in that** with said middle ply (200) having a plurality of reference fibres extending along a reference direction, said reference direction (Y) is parallel to said pitch variation axis (AY).

5. Blade according to Claim 2,
**characterised in that** said stack (13) has a variable number of plies along the span of said blade (1).

6. Blade according to any one of the preceding claims,
**characterised in that** said strip (10) projects from said first end zone (3) of said covering to represent a first end (1') of the blade (1) suitable for fastening to a hub (110).

7. Blade according to any one of the preceding claims,
**characterised in that** said first fastening means (11) have an offset relative to said second fastening means (12) along a chord of the blade (1).

8. Blade according to any one of the preceding claims,
**characterised in that** said first fastening means (11) extends in the cavity (8) along a first longitudinal direction (D1) parallel to said pitch variation axis (AY), the second fastening means (12) extending in the cavity (8) along a second longitudinal direction (C2) parallel to said pitch variation axis (AY).

9. Blade according to any one of the preceding claims,
**characterised in that** with said outer covering (2) comprising a pressure side skin (2") and a suction side skin (2'), said strip (10) comprising a front zone (14) close to the leading edge (20) of the blade (1) and a rear zone (15) close to the trailing edge (30) of the blade (1), said first fastening means (11) fastens the front zone (14) to one of said skins (2', 2"), and the second fastening means (12) fastens the rear zone (15) to the other skin (2", 2') to which the front zone (14) is not fastened.

10. Blade according to any one of the preceding claims,
**characterised in that** it includes a leading edge spar (20) connecting a pressure side skin (2") to a suction side skin (2') of said outer covering (2).

11. Blade according to any one of the preceding claims,
**characterised in that** it includes a trailing edge ledge (30) connecting a pressure side skin (2") to a suction side skin (2') of said outer covering (2).

12. Blade according to any one of the preceding claims,
**characterised in that**, with said outer covering (2) comprising a pressure side skin (2") and a suction side skin (2'), at least one skin (2', 2") comprises a composite material that is anisotropic.

13. Blade according to any one of the preceding claims,
**characterised in that** it includes an adjusting means (50) for modifying the position of the centre of gravity of the blade (1).

14. Blade according to any one of the preceding claims,
**characterised in that** at least one segment of said strip is twisted, said at least one segment of said strip exhibiting a twist law.

15. Blade according to any one of the preceding claims,
**characterised in that** at least one segment of said outer covering is twisted, said at least one segment of said outer covering exhibiting a twist law.

16. Rotorcraft rotor (100) provided with a hub (110) and a plurality of blades (1),
**characterised in that** at least one blade (1) is according to any one of the preceding claims.

## Patentansprüche

1. Rotorblatt (1) mit adaptiver Verdrehung mit einer Außenhaut (2), die sich entlang einer Achse (AY) der Verstellung des Anstellwinkels ausgehend von einem ersten Endbereich (3) bis zu einem zweiten Endbereich (4) erstreckt, wobei diese Außenhaut (2) einen inneren Hohlraum (8) begrenzt,
**gekennzeichnet durch** ein Blatt (10), welches sich im Inneren des Hohlraums (8) erstreckt und ein anisotropes Verbundmaterial aufweist, um sich unter der Einwirkung von Zentrifugalkräften (F) verdrehen zu können, wenn das Rotorblatt (1) sich dreht, wobei das Blatt (10) über ein erstes Befestigungsmittel (11) und ein zweites Befestigungsmittel (12) an der Außenhaut (2) befestigt ist, um die Außenhaut (2) verdrehen zu können.

2. Rotorblatt nach Anspruch 1, **dadurch gekennzeichnet, dass** das Blatt einen Stapel (13) gleich ausgerichteter bezüglich einer Mittellage (200) antisymmetrischer Verbundlagen aufweist.

3. Rotorblatt nach Anspruch 2,
**dadurch gekennzeichnet, dass** die Mittellage (200) eine Mehrzahl von Referenzfasern aufweist, die sich entlang einer Referenzrichtung (Y) erstrecken, eine erste Lage (201, 211, 221, 231, 241, 251, 261) und eine zweite Lage (202, 212, 222, 232, 242, 252, 262) des Stapels symmetrisch zu beiden Seiten der Mittellage (200) angeordnet sind, wobei die erste Lage (201, 211, 221, 231, 241, 251, 261) zwischen der Mittellage (200) und einer saugseitigen Haut (2') der Außenhaut (2) angeordnet ist und erste Fasern aufweist mit einer ersten Winkelausrichtung bezüglich der Bezugsrichtung (Y), wobei die zweite Lage (202, 212, 222, 232, 242, 252, 262) zwischen der Mittellage (200) und einer druckseitigen Haut (2") der Außenhaut (2) angeordnet ist und zweite Fasern aufweist mit einer zweiten Winkelausrichtung bezüglich der Referenzrichtung (Y), wobei die erste Winkelausrichtung gleich der entgegengesetzten zweiten Winkelausrichtung ist.

4. Rotorblatt nach einem der Ansprüche 2 oder 3,
**dadurch gekennzeichnet, dass** die Mittellage (200) eine Mehrzahl von Referenzfasern aufweist, die sich entlang einer Referenzrichtung erstrecken, wobei die Referenzrichtung (Y) parallel zu der Achse der Verstellung des Anstellwinkels (AY) ist.

5. Rotorblatt nach Anspruch 2,
**dadurch gekennzeichnet, dass** der Stapel (13) eine Anzahl variabler Lagen entlang der Spannweitenerstreckung des Rotorblatts (1) aufweist.

6. Rotorblatt nach einem der vorstehenden Ansprüche,
**dadurch gekennzeichnet, dass** das Blatt (10) über den ersten Endbereich (3) der Außenhaut vorsteht, um ein erstes Ende (1') des Rotorblatts (1) zu bilden, welches an einer Nabe (110) befestigt werden kann.

7. Rotorblatt nach einem der vorstehenden Ansprüche,
**dadurch gekennzeichnet, dass** das erste Befestigungsmittel (11) gegenüber dem zweiten Befestigungsmittel (12) entlang einer Sehne des Rotorblatts (1) versetzt ist.

8. Rotorblatt nach einem der vorstehenden Ansprüche,
**dadurch gekennzeichnet, dass** das erste Befestigungsmittel (11) sich in dem Hohlraum (8) in einer ersten Längsrichtung (D1) parallel zur Anstellwinkelveränderungsrichtung (AY) erstreckt, und das zweite Befestigungsmittel (12) sich in dem Hohlraum (8) entlang einer zweiten Längsrichtung (D2) erstreckt, die parallel zur Achse der Veränderung des Anstellwinkels (AY) verläuft.

9. Rotorblatt nach einem der vorstehenden Ansprüche,
**dadurch gekennzeichnet, dass** die Außenhaut (2) eine druckseitige Haut (2") und eine saugseitige Haut (2') aufweist, wobei das Blatt (10) einen vorderen Bereich (14) in der Nähe der Vorderkante (20) des Rotorblatts (1) und einen hinteren Bereich (15) in der Nähe der Hinterkante (30) des Rotorblatts (1) aufweist, wobei das erste Befestigungsmittel (11) den vorderen Bereich (14) an einer der besagten Häute (2', 2") befestigt, und das zweite Befestigungsmittel (12) den hinteren Bereich (15) an der anderen Haut (2", 2'), an der der vordere Bereich (14) nicht befestigt ist, befestigt.

10. Rotorblatt nach einem der vorstehenden Ansprüche,
**dadurch gekennzeichnet, dass** es einen Vorderkantenlängsträger (20) aufweist, der eine druckseitige Haut (2") und eine saugseitige Haut (2') der Außenhaut (2) verbindet.

11. Rotorblatt nach einem der vorstehenden Ansprüche,
**gekennzeichnet durch** einen hinterkanten(30)-seitigen Gratsparren, der eine druckseitige Haut (2") und eine saugseitige Haut (2') der Außenhaut (2) verbindet.

12. Rotorblatt nach einem der vorstehenden Ansprüche,
**dadurch gekennzeichnet, dass** die Außenhaut (2) eine druckseitige Haut (2") und eine saugseitige Haut (2') aufweist, wobei mindestens eine Haut (2', 2") ein anisotropes Verbundmaterial aufweist.

13. Rotorblatt nach einem der vorstehenden Ansprüche,
**gekennzeichnet durch** ein Steuermittel (50) zum Verändern der Lage des Schwerpunktes des Rotorblatts (1).

14. Rotorblatt nach einem der vorstehenden Ansprüche,
**dadurch gekennzeichnet, dass** mindestens ein Abschnitt des Blattes verdreht ist, wobei mindestens ein Abschnitt des Blattes eine Verdrehgesetzmäßigkeit aufweist.

15. Rotorblatt nach einem der vorstehenden Ansprüche,
**dadurch gekennzeichnet, dass** mindestens ein Abschnitt der Außenhaut verdreht ist und mindestens ein Abschnitt der Außenhaut einer Verdrehgesetzmäßigkeit folgt.

16. Rotor eines Drehflügelflugzeugs (100) mit einer Nabe (110) und einer Mehrzahl von Rotorblättern (1),
**dadurch gekennzeichnet, dass** mindestens ein Rotorblatt (1) gemäß mindestens einem der vorstehenden Ansprüche ausgeführt ist.
